# EUROPÄISCHE PATENTSCHRIFT

(11) **EP 4 438 358 B1**
(45) Veröffentlichungstag und Bekanntmachung des Hinweises auf die Patenterteilung: **08.07.2026**
(21) Anmeldenummer: 24160697.9
(22) Anmeldetag: 29.02.2024
(51) Int. Cl.: B60J 5/04, B60R 13/02

(54) **GRUNDKÖRPER ZUR ANORDNUNG UND BEFESTIGUNG VON TÜRVERKLEIDUNGSELEMENTEN FÜR EINE KRAFTFAHRZEUGTÜR**
BASE BODY FOR ASSEMBLING AND FASTENING DOOR TRIM ELEMENTS FOR A MOTOR VEHICLE DOOR
CORPS DE BASE POUR LE MONTAGE ET LA FIXATION D'ÉLÉMENTS DE GARNITURE DE PORTE POUR UNE PORTE DE VÉHICULE AUTOMOBILE

(30) Priorität: 21.03.2023 DE 102023107025
(43) Veröffentlichungstag der Anmeldung: 02.10.2024
(73) Patentinhaber: Ford Global Technologies, LLC, Dearborn, MI 48126-2701 (US)
(72) Erfinder: Köhler, Jürgen, 50825 Köln (DE); G., Muhil Raj, 600119 Chennai, Tamil Nadu (IN); Vigneshwaran, Hari, 638656 Dharapuram, Tamil Nadu (IN); Aruldoss, Arul Praveen, 600051 Chennai, Tamil Nadu (IN); Bappert, Silvia, 53721 Siegburg (DE)
(74) Vertreter: Markowitz, Markus

(56) Entgegenhaltungen:
- EP-A1- 1 652 706
- DE-A1- 102015 107 136
- KR-B1- 100 387 783

## Beschreibung

Die Erfindung betrifft einen Grundkörper zur Anordnung und Befestigung von Türverkleidungselementen für eine Kraftfahrzeugtür mit den Merkmalen des Oberbegriffs des Anspruchs 1.

Die DE 10 2010 005 365 A1 betrifft eine Grundstruktur für eine Kraftfahrzeugtür mit einem Abschnitt, welcher dazu dient einen Teil eines Schachtes zur Aufnahme der Fensterscheibe der Kraftfahrzeugtür zu bilden, und mit einer den Fensterschacht verstärkenden Schachtverstärkung, welche dem Abschnitt der Grundstruktur zugeordnet ist. Es ist vorgesehen, dass die Schachtverstärkung an der Grundstruktur angeformt ist. Auch wird eine Kraftfahrzeugtür mit einer solchen Grundstruktur thematisiert.

Die DE 10 2010 053 957 A1 betrifft ein Verfahren zum Herstellen eines Hybridbauteils, insbesondere für eine Karosserie eines Personenkraftwagens, bei welchem wenigstens zwei Bauteile, insbesondere Metallbauteile und/oder Faserverbundwerkstoff-Bauteile, miteinander verbunden und zumindest teilweise mit einem Kunststoff versehen werden, wobei die wenigstens zwei Bauteile über wenigstens eine Hohlstanznietverbindung miteinander verbunden werden, bevor diese mit dem Kunststoff versehen werden. Darüber hinaus wird nach diesem Verfahren hergestelltes Hybridbauteil vorgestellt.

Ein Verstärkungselement zur Verstärkung einer Außenplatte einer Fahrzeugtür gemäß der US 7 448 670 B2 umfasst eine obere Wand, eine äußere Wand, einen Schenkel und einen Verstärkungsträger. Der Schenkel erstreckt sich zwischen einem unteren Ende der oberen Wand und einem oberen Ende der äußeren Wand. Der Verstärkungsträger ist an einem unteren Ende der Außenwand zur Verstärkung der Außenplatte der Fahrzeugtür ausgebildet. Ein allgemein S-förmiger Flansch wird zwischen dem unteren Ende der oberen Wand und dem Schenkel gebildet. Ein Teil des S-förmigen Flansches ist im Wesentlichen parallel zur oberen Wand, um eine Aussparung neben dem S-förmigen Flansch zu bilden, die eine verbesserte Befestigung einer Türdichtung daran ermöglichen soll.

In einem Türrahmen für ein Fahrzeug, der über eine Verstärkungshalterung an einem Türblatt befestigt ist, hat der Türrahmen gemäß der US 8 864 213 B2 einen vorstehenden Abschnitt, der von einem Konstruktionsabschnitt über einen Bereich von einem rahmenbildenden Abschnitt, der an der Außenseite der Tür erscheint, zu einem Einsetzabschnitt, der an der Verstärkungshalterung befestigt ist, in Richtung der Innenseite des Fahrzeugs vorsteht, wobei der vorstehende Abschnitt zu einer verbreiterten Form geformt ist, die den Abstand zwischen einer Wandfläche an der inneren Umfangsseite des Rahmens und einer Wandfläche an der äußeren Umfangsseite des Rahmens am Einsetzabschnitt größer macht als den am rahmenbildenden Abschnitt. Dementsprechend soll die Festigkeit des befestigten Teils des Türrahmens an der Verstärkungshalterung verbessert werden. Darüber hinaus soll die Selektivität der Schweißstelle zwischen dem Türrahmen und dem Verstärkungswinkel verbessert werden.

Eine hybride Multi-Material-Außenriemen-Verstärkungsanordnung gemäß der US 9 610 829 B1 umfasst einen Metallkörper mit einem ersten Schenkel und einem zweiten Schenkel, der in einem Winkel in Bezug auf den ersten Schenkel ausgerichtet ist. Der zweite Schenkel ist einstückig mit dem ersten Schenkel verbunden und bildet eine Verbindungsstelle. Eine Verstärkungsrippe aus Polymermaterial hat ein Rippenende, das die Verbindungsstelle berührt, und einen Rippenkörper, der sich von der Verbindungsstelle weg erstreckt und den Winkel zwischen dem ersten Schenkel und dem zweiten Schenkel halbiert. Die Verstärkungsrippe hat eine Rippenlänge, die sich im Wesentlichen über die gesamte Länge des Metallkörpers erstreckt. Flansche sind einstückig mit der Verstärkungsrippe verbunden, wobei jeder einen ersten Flanschabschnitt und einen zweiten Flanschabschnitt aufweist, die jeweils den Metallkörper berühren, um eine Torsionsdrehung des Metallkörpers, die den Winkel des zweiten Schenkels in Bezug auf den ersten Schenkel vergrößert oder verkleinert, zu dämpfen.

Grundkörper für Kraftfahrzeugtüren der eingangs genannten Art sind ein wesentlicher Bestandteil eines Kraftfahrzeugs, da sie als Schnittstelle zwischen dem Innenraum des Fahrzeugs und dem Innenleben einer Tür sowie zwischen Fahrzeuginsassen und der Tür dienen. Bei einem Kraftfahrzeug kann es sich beispielsweise um einen Pkw, einen Lkw oder einen Bus handeln, wobei das Kraftfahrzeug als Batterieelektrisches Kraftfahrzeug (BEV), Hybridfahrzeug (HBEV) oder mit anderen Antrieben versehen sein kann.

Der Grundkörper wird in der Regel unter Berücksichtigung der Geborgenheit der Fahrzeuginsassen konstruiert und soll Belastungen in die Karosserie des Fahrzeugs leiten. Der Grundkörper kann üblicherweise als Spritzgussteil aus Kunststoff hergestellt werden. Die dafür notwendigen Materialien bzw. Werkstoffe, insbesondere Kunststoffe sind bekannt, wobei solche gewählt werden, die den Normen und hohen Anforderungen der Fahrzeugindustrie entsprechen. Dieses Vorgehen erleichtert die Herstellung des Grundkörpers und senkt zudem die Herstellungskosten, wobei Grundkörper aus dünnwandigen Formteilen den Bedarf an anderen energieabsorbierenden Materialien reduzieren.

Im Allgemeinen werden an dem Grundkörper Türverkleidungselemente, d. h. die Innenteile der Türen, die die Bedienelemente und dekorative Teile enthalten, separat angeordnet und befestigt. Solche Türverkleidungselemente sind in der DE 20 2012 003 435 U1 und DE 10 2015 107 136 A1 beispielhaft beschrieben.

Die DE 20 2012 003 435 U1 beschäftigt sich einer Dekorplatte, die insbesondere dazu gedacht ist, eine Kraftfahrzeug-Türinnenplatte zu bilden, von der Art umfassend:
- einen ersten Teil, der eine Durchgangsöffnung aufweist, die von einem oberen Rand und einem unteren Rand, die durch zweiseitliche Ränder miteinander verbunden sind, begrenzt ist, und
- einen zweiten Teil, der dazu gedacht ist, gegenüber dem ersten Teil angeordnet zu sein, um mit diesem ersten Teil ein Fach zu bilden, das durch die Öffnung hindurch zugänglich ist.

Beschrieben sind in der DE 20 2012 003 435 U1 untere Mittel zur Befestigung der ersten und zweiten Teile, die sich an dem unteren Rand der Öffnung entlang erstrecken und ein erstes unteres Befestigungsorgan, das von dem ersten Teil getragen wird, und ein zweites unteres Befestigungsorgan, welches komplementär zum ersten ist und von dem zweiten Teil getragen wird. Die DE 20 2012 003 435 U1 beschäftigt sich demnach mit einem Türverkleidungselement.

Gemäß der DE 10 2015 107 136 A1 wird ein fachbildendes Verkleidungsteil für eine Fahrzeugtür bereitgestellt. Das fachbildende Verkleidungsteil umfasst einen Verkleidungsabschnitt und einen Fachbegrenzungsabschnitt. Der Verkleidungsabschnitt ist dafür ausgelegt, eine Fachöffnung zu bilden. Der Fachbegrenzungsabschnitt weist einen Fachbodenabschnitt und einen Fachwandabschnitt auf. Der Fachbegrenzungsabschnitt ist in Bezug auf den Verkleidungsabschnitt umklappbar, um die Bildung eines Fachs an der Tür fertigzustellen. Die DE 10 2015 107 136 A1 beschäftigt sich demnach ebenso mit einem Türverkleidungselement.

Der Grundkörper weist ein oberes Verstärkungselement auf, das mit dem Grundkörper verbindbar ist.

Das Verstärkungselement erstreckt sich bevorzugt entlang eines oberen Bereiches des Grundkörpers, und bildet quasi ein oberes Rahmenteil des Grundkörpers. Das Verstärkungselement weist Flansche auf, die auch als Befestigungsrippen bezeichnet werden können, und welche sich nach unten erstrecken um die Türverkleidungselemente mit dem Grundkörper zu verbinden.

Bei der Montage der Türverkleidungselemente, insbesondere derer, die im Bereich des oberen Verstärkungselementes angeordnet sind, kann das obere Verstärkungselement selbst, oder auch dessen nach unten orientierten Flansche im Wege sein, weswegen das Verstärkungselement erst nach Montage aller erforderlichen Türverkleidungselemente an dem Grundkörper abschließend montiert werden kann. Dies beinhaltet aber, dass das obere Verstärkungselement als separates Bauteil in einem besonderen Spritzgießwerkzeug hergestellt werden muss, um dann mit besonderen Werkzeugen an dem Grundkörper so befestigt werden muss, dass dessen Funktion und auch seine Flansche an der korrekten Position angeordnet sind, um die Türverkleidungselemente korrekt zu halten. Dies erschwert die Handhabung und erhöht die Kosten erheblich.

Von daher bietet der Bereich der Grundkörper für Kraftfahrzeugtüren mit Türinnenverkleidungselementen, insbesondere hinsichtlich des oberen Verstärkungselementes durchaus noch Raum für Verbesserungen.

Der Erfindung liegt die Aufgabe zugrunde einen Grundkörper zur Anordnung und Befestigung von Türverkleidungselementen für eine Kraftfahrzeugtür mit einfachen Mitteln zu Verbessern.

Erfindungsgemäß gelingt die Lösung der Aufgabe mit einer Grundkörper mit den Merkmalen des Anspruchs 1.

Aufgezeigt wird ein Grundkörper zur Anordnung und Befestigung von Türverkleidungselementen für eine Kraftfahrzeugtür welcher spritzgusstechnisch hergestellt ist, aufweisend einen Rahmen, der ein oberes Verstärkungselement als oberes Rahmenteil aufweist, welches von diesem abstehende Flansche aufweist. Erfindungsgemäß weist der Rahmen in Längsrichtung zueinander beabstandete Hochstreben auf, an deren Stirnseiten das Verstärkungselement über jeweils ein Gelenkelement einstückig in einer von dem Rahmen abstehenden Fertigungsposition angeformt ist.

Es ist darauf hinzuweisen, dass die in der nachfolgenden Beschreibung einzeln aufgeführten Merkmale sowie Maßnahmen in beliebiger technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Mit der Erfindung wird ein Grundkörper für eine Kraftfahrzeugtür bereitgestellt, der in einfacher Weise hinsichtlich einer vereinfachten Montage von Türverkleidungselementen verbessert ist. War es im Stand der Technik erforderlich, das Verstärkungselement in einem separaten Spritzgussschritt herzustellen und mit Spezialwerkzeug an dem Rahmen zu befestigen, kann der Rahmen mit der Erfindung zusammen mit dem Verstärkungselement hergestellt werden. Es entfallen mit der Erfindung also ein zusätzliches Spritzgusswerkzeug, sowie Werkzeuge und Aufwand zur separaten Montage. Trotz der einstückigen Herstellung mit dem Rahmen ist das Verstärkungselement bei der Montage der Türverkleidungselemente dennoch nicht störend, da dieses vorteilhaft in der Fertigungsposition von dem Rahmen abstehend an diesem angeformt ist.

Bevorzugt ist dabei vorgesehen, wenn das Verstärkungselement in der Fertigungsposition vertikal, also nach oben orientiert von dem Rahmen absteht. In besonders vorteilhafter Ausgestaltung ist vorgesehen, dass zumindest ein Teil der Flansche, insbesondere die längeren, in der Fertigungsposition seitlich, also annähend waagerecht von dem Verstärkungselement abstehen. So ist besonders viel Platz zur Montage der Türverkleidungselemente geschaffen, ohne dass die Flansche des Verstärkungselementes im Wege wären.

Der Rahmen weist Hochstreben auf, die in Längsrichtung gesehen zueinander beabstandet sind, und an welchen das Verstärkungselement angeordnet ist. Wie bereits erwähnt, ist dabei vorgesehen, dass an jeder der Hochstreben, also an den jeweiligen Stirnseiten der Hochstreben die Anbindung zu dem Verstärkungselement über die Gelenkelemente erfolgt, weswegen auch nur zwei Gelenkelemente, nämlich eines an jeder Hochstrebe erforderlich sind.

In idealer Ausgestaltung sind die Gelenkelemente dabei als Filmscharniere ausgeführt. Dabei sind die Gelenkelemente bevorzugt so ausgeführt, dass sich das Verstärkungselement quasi in einer zu den Hochstreben beabstandeten Fertigungsposition befindet. Dieser Umstand erleichtert die Montage der Türverkleidungselemente noch einmal. Da mehr Montageraum zur Verfügung steht. Die Gelenkelemente haben so eine Doppelfunktion. Zum einen dienen diese dazu, dass das Verstärkungselement aus der Fertigungsposition in eine Endmontageposition bewegbar, also rotierbar ist. Zum anderen dienen die Gelenkelemente als Abstandsmittel zur beabstandeten Halterung des Verstärkungselementes in der Fertigungsposition.

Mittels der Gelenkelemente, also der bevorzugten Filmscharniere kann das Verstärkungselement aus der Fertigungsposition in eine Endmontageposition verschwenkt werden, wenn die erforderlichen Türverkleidungselemente an dem Rahmen montiert sind. In der Endmontageposition gelangen die Flansche des Verstärkungselementes in Anlage mit den mit den betrefflichen Türverkleidungselementen, bzw. mit den daran angeordneten zu den Flanschen korrespondierenden Gegenelementen, wodurch die jeweiligen Türverkleidungselemente lagegesichert werden.

Das Verstärkungselement kann auch als Einhängeleiste oder verstärkende Türverkleidungseinhängeleiste bezeichnet werden, wobei der Grundkörper als Türverkleidungsträgerteil bezeichnet werden kann. Das Verstärkungselement ist insofern als Einhängeleiste quasi Bestandteil der Türverkleidung um damit das Türverkleidungselement übergreifend an die Fensterschachtleiste zu hängen, so dass das Türverkleidungselement vertikal aber auch zum Fahrzeuginneren hin lagesicher gehalten ist. Mit der Erfindung wird zielführend erreicht, dass das Verstärkungsteil, also die Einhängeleiste über das Gelenkelement, in der besonders günstigen Ausgestaltung als Filmscharnier, direkt an den Grundkörper, also an das Türverkleidungsträgerteil, insbesondere an den Stirnseiten der Hochstreben angeformt werden kann. Mit der Erfindung wird ein als Einhängeleiste dienendes Strukturbauteil im oberen Teil der Türverkleidung aufgezeigt, welches nach dem Verschwenken aus der Fertigungsposition in die Endmontageposition insbesondere als strukturelles, also verstärkendes und befestigendes Element des inneren Türbrüstungsbereiches wirkt, und dabei insbesondere kein Sichtteil ist. Dabei ist daran gedacht, dass die Türverkleidungselemente zur finalen Befestigung mit dem Türverkleidungsträgerteil und/oder mit der Türverkleidungseinhängeleiste insbesondere stoffschlüssig z.B. durch Verschweißen, also Kunststoffschweißen unlösbar verbunden werden, um so eine strukturell robuste Türverkleidung zu bilden. In bevorzugter Ausgestaltung ist eine obere Türbrüstung gebildet.

Um zu erreichen, dass das Verstärkungselement zusammen mit den Flanschen vor der finalen Fixierung in der Endmontageposition verbleibt, sind zielführend Verriegelungselemente vorgesehen, die in der Endmontageposition ineinandergreifen. Die Verriegelungselemente können in idealer Ausgestaltung vor der finalen Fixierung noch unzerstörbar voneinander getrennt werden, wenn dies erforderlich sein sollte.

In bevorzugter Ausgestaltung sind dazu Rastmittel und Gegenrastmittel vorgesehen. Zielführend ist dabei, wenn an jeweiligen Hochstreben und an dem Verstärkungselement einander korrespondierende Rast- und Gegenrastmittel vorgesehen sind. Bevorzugt ist weiter, wenn Rast- und Gegenrastmittel wechselseitig an Hochstreben und Verstärkungselement angeordnet sind.

In besonders bevorzugter Ausgestaltung kann vorgesehen sein, an dem Verstärkungselement an einer Seite einen Rasthaken mit Rastfläche und an dem Rahmen, also an der betrefflichen Hochstrebe eine Gegenrastfläche angeordnet ist. An der dazu gegenüberliegenden Hochstrebe ist dann zielführend ein Rasthaken mit Rastfläche angeordnet, wobei an dem Verstärkungselement eine dazu korrespondierende Gegenrastfläche angeordnet ist. Aufgrund der wechselseitigen Anordnung von Rasthaken und Gegenrastfläche ist eine besonders gute Lagesicherung der Endmontageposition möglich.

Man könnte auch sagen, dass das Verstärkungselement in der Fertigungsposition eine rotierte Orientierung gegenüber der Endmontageposition aufweist. Durch die rotierte Orientierung der Fertigungsposition gegenüber der Endmontageposition wird mit der Erfindung vorteilhaft ermöglicht:
a) Montage der anderen Türverkleidungselemente ohne Kollision mit dem Verstärkungselement, wie bereits oben beschrieben wurde, aber auch
b) ein integratives mit-anformen des Verstärkungselementes an den Rahmen als insgesamt einteiliges Spritzguß-, Gieß- oder Pressteil, wodurch vorteilhaft ein separates Spritzguß-, Gieß- oder Presswerkzeug wie auch die Logistik und Handhabung für ein separates Bauteil entfällt, und
c) Einsparung eines Schiebers (beweglich angetriebenes Element im Formwerkzeug) welcher sonst wegen der unterschiedlichen Entformrichtungen des Verstärkungselements bezogen auf den Rahmen erforderlich wäre.

Weitere vorteilhafte Ausgestaltungen der Erfindung sind in den Unteransprüchen und der folgenden Figurenbeschreibung offenbart. Es zeigen:
- Fig. 1a bis1c: einen Grundkörper einer Kraftfahrzeugtür in einer perspektivischen Ansicht mit Ausschnitten zur Darstellung einer gelenkigen Anbindung,
- Fig. 2: den Grundkörper aus Figur 1 mit daran angeordneten Türverkleidungselementen,
- Fig. 3a und 3b: einen Ausschnitt des Verstärkungselementes in der Fertigungsposition und in der Endmontageposition, und
- Fig 4a und 4b: eine Vergrößerung aus Figur 3b zur Darstellung von Verriegelungselementen.

In den unterschiedlichen Figuren sind gleiche Teile stets mit denselben Bezugszeichen versehen, weswegen diese in der Regel auch nur einmal beschrieben werden.

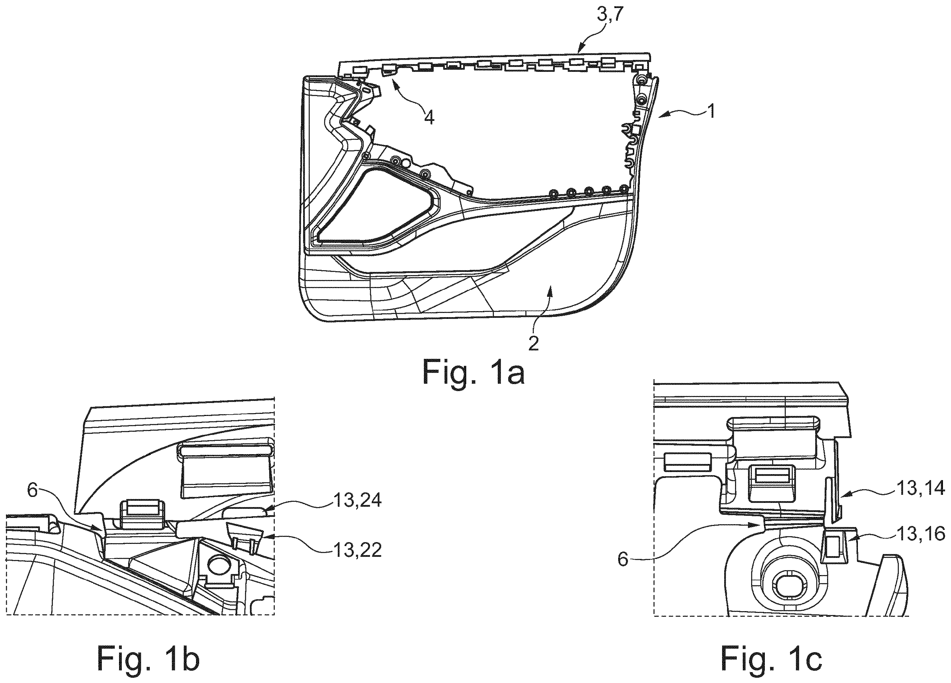

Figur 1 zeigt einen Grundkörper 1 für eine Kraftfahrzeugtür. Der Grundkörper ist spritzgusstechnisch hergestellt ist, und weist einen Rahmen 2 auf. Der Rahmen 2 hat ein oberes Verstärkungselement 3, welches von diesem abstehende Flansche 4 aufweist. Das Verstärkungselement 3 ist über zumindest zwei Gelenkelemente 6 einstückig in einer von dem Rahmen 2 abstehenden Fertigungsposition 7 an dem Rahmen 2 angeformt.

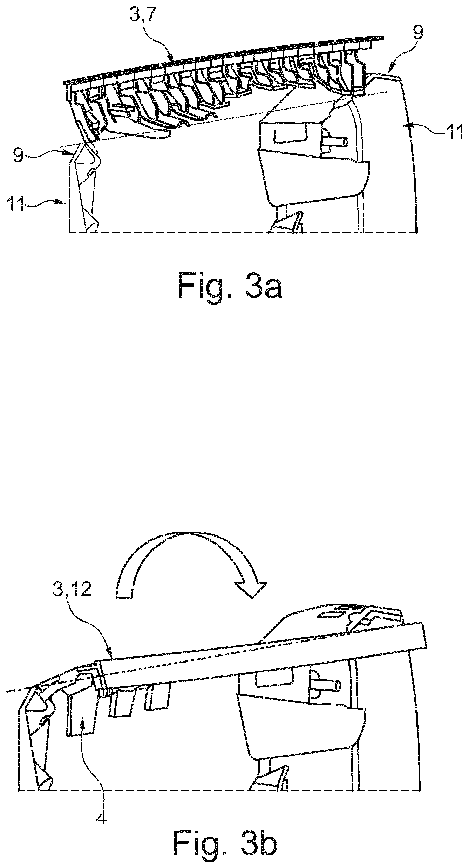

Wie in Figur 3a erkennbar, sind die Flansche 4 unterschiedlich ausgeführt. Dabei sind einige länger als die anderen. Der Grundkörper 1 kann auch als Türverkleidungsträgerteil bezeichnet werden. Das Verstärkungselement 3 kann auch als Einhängeleiste oder verstärkende Türverkleidungseinhängeleiste bezeichnet werden.

In der Fertigungsposition 7 steht das Verstärkungselement 3 in der Zeichnungsebene der Figur 1 quasi nach oben wegorientiert von dem Rahmen 2 ab. Ein Teil der Flansche 4, insbesondere die längeren, sind winklig an dem Verstärkungselement 3 angeordnet und befinden sich annähernd in einer waagerechten Position, wenn das Verstärkungselement 3 in der Fertigungsposition 7 an dem Rahmen 2 angeordnet ist.

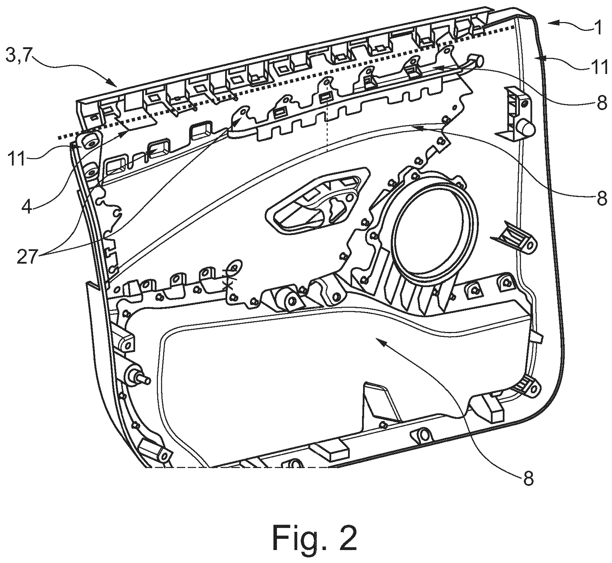

Bei dem in Figur 1a dargestellten Ausführungsbeispiel ist der Grundkörper 1 noch frei von jeglichen Türverkleidungselementen 8, die bei dem Ausführungsbeispiel nach Figur 2 an dem Grundkörper 1 angeordnet sind. Türverkleidungselemente 8 sind beispielsweise die Innenteile der Türen, die die Bedienelemente und dekorative Teile enthalten. Diese können an dem Grundkörper 1, also an dessen Rahmen 2 trotz des Vorhandenseins des oberen Verstärkungselementes 3 separat angeordnet und befestigt werden. Erkennbar ist, dass das Verstärkungselement 3, aber auch dessen Flansche 4 dem Einbau der Türverkleidungselemente 8 nicht im Wege stehen.

Dies liegt an der erfindungsgemäßen Ausgestaltung, nämlich an der vorteilhaften Anbindung des Verstärkungselementes 3 an dem Rahmen 2 über zumindest zwei Punkte, wobei hier gemäß der Erfindung zwei Gelenkelemente 6 vorgesehen sind.

Der Rahmen 2 und das Verstärkungselement 3 ist zusammen mit dessen Flanschen 4 einstückig mittels spritzgußtechnisch verarbeitbarem Kunststoff hergestellt. Das kunststoffbasierte Spritzgießen erlaubt dabei eine Vielzahl von Freiheitsgraden hinsichtlich der Ausgestaltung des herzustellenden Bauteils. Insbesondere können mit der Erfindung die Gelenkelemente 6, die zur Anbindung des oberen Verstärkungselementes 3 an dem Rahmen 2 dienen in besonders einfacher Weise hergestellt werden. Dabei ist insbesondere daran gedacht, dass die Gelenkelemente 6 als Filmscharniere ausgeführt sind, wie in Figur 1b und 1c zu erkennen. Die beiden Gelenkelemente 6 sind dabei jeweils im Endbereich des Verstärkungselementes 3 angeordnet.

Wie insbesondere den Figuren 1 bis 3 zu entnehmen ist, ist das Verstärkungselement 3 an Stirnseiten 9 von Hochstreben 11 des Rahmens 2 angebunden, wobei die Gelenkelemente 6, also die Filmscharniere zwischengeordnet sind.

Auch die Flansche 4 können sinnvoller Weise bereits bei der einstückigen Herstellung von Rahmen 2 und Verstärkungselement 3 mit angeformt werden. Dabei ist vorteilhaft, dass diese in der Fertigungsposition 7 so angeordnet sind, dass ein Einbau der Türverkleidungselemente 8 komplikationslos erfolgen kann. Wie in der Zeichnungsebene der Figuren 1, 2 und 3a erkennbar, stehen diese in der Fertigungsposition 7 annähernd waagerecht von dem Verstärkungselement 3 ab. Die Flansche 4 sind aber in der Fertigungsposition 7 des oberen Verstärkungselementes 3 bereits so angeformt, dass diese durch ein Überführen des oberen Verstärkungselementes 3 aus der Fertigungsposition 7 in eine Endmontageposition 12, die in Figur 3b erkennbar ist, nicht noch einmal umgeformt werden müssen. In der Endmontageposition 12 weisen die Flansche 4, die auch als Befestigungsrippen für die jeweiligen zugeordneten Türverkleidungselemente 8 bezeichnet werden können, einfach durch das Umklappen in Richtung des Rotationspfeils in Figur 3b bereits die korrekte Position auf.

Sind alle Türverkleidungselemente 8 an dem Grundkörper 1, also an dessen Rahmen 2 montiert, kann das obere Verstärkungselement 3 aus der Fertigungsposition 7 in die Endmontageposition 12 überführt werden, was in Figur 3b angedeutet ist.

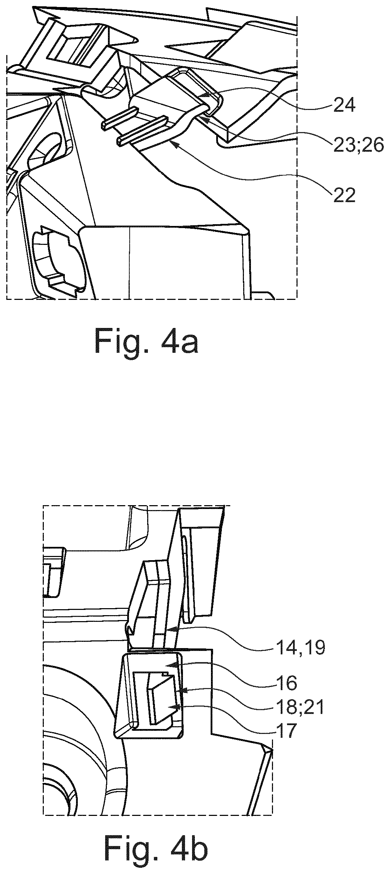

Zur Festlegung in der Endmontageposition 12 sind Verriegelungselemente 13 vorgesehen, die in Figur 4a und 4b erkennbar, aber auch in den Figuren 1b und 1c angedeutet sind.

Die Verriegelungselemente 13 sind, wie am besten in den Figuren 4a und 4b erkennbar ist, bevorzugt als Rastverbindung ausgeführt. In den Figuren 1 b und 1c sind die Verriegelungselemente 13 außer Eingriff.

Bei dem in Figur 4b dargestellten Ausführungsbeispiel ist an dem Verstärkungselemente 3 ein Rasthaken 14 angeordnet, der in der Endmontageposition 12 mit einem Gegenrastelement 16 in Eingriff ist. Das Gegenrastelement 16 ist an dem Rahmen 2, also an der in der Zeichnungsebene der Figur 1 rechten Hochstrebe 11 angeordnet. Der Rasthaken 14 weist an seinem freien Ende eine konisch ausgeführte Gleitfläche 17 und eine Rastfläche 18 auf. Mit der Gleitfläche 17 gleitet der Rasthaken 14 an dem Gegenrastelement 16 bei der Überführung in die Endmontageposition 12 ab. Dadurch wird der Rasthaken 14 mit seinem Raststeg 19 quasi federkraftbedingt ausgelenkt. Mit seiner Rastfläche 18 hintergreift der Rasthaken 14 eine Gegenrastfläche 21 des Gegenrastelementes 16.

Bei den in Figur 4a dargestellten Ausführungsbeispiel, also an dem in der Zeichnungsebenen der Figur 1 dargestellten linken Hochstrebe 11 ist ein Rasthaken 22 mit seiner Rastfläche 23 an der Hochstrebe 11 angeordnet, während das dazu korrespondierende Gegenrastmittel 24 mit seiner Gegenrastfläche 26 als Widerhaken an dem Verstärkungselement 3 angeordnet ist.

Bei der Überführung des Verstärkungselementes 3 in die Endmontageposition 12 werden die jeweiligen Rasthaken 14, 22 ausgelenkt, und hintergreifen dann mit der jeweiligen Rastfläche 18, 23 die jeweilige Gegenrastfläche 21,26.

So ist die Endmontageposition 12 kraft- und formschlüssig gesichert festgelegt, was durch die ideale, wechselseitige Anordnung von Rasthaken 14,22 und Gegenrastfläche 18,23 noch verbessert wird. In Figur 2 ist noch erkennbar, dass entsprechende Gegenelemente 27 für die Flansche 4 an den zugeordneten Türverkleidungselementen 8 angeordnet sind.

Mit der Erfindung ist auch möglich, das Verstärkungselement 3 sofern erforderlich und/oder gewünscht auch wieder in die Fertigungsposition 7 zurück zu überführen. Dazu müssen lediglich die Verriegelungselemente 13, also die jeweilige Rastverbindungen gelöst werden. Aufgrund der Gelenkelemente 6, also der Filmscharniere wäre das Verstärkungselement 3 dann wieder in er Fertigungsposition 7 angeordnet, und Türverkleidungselemente 8 könnten gegebenenfalls ausgetauscht werden, bevor die Türverkleidungselemente 8 endgültig, gegebenenfalls durch Verschweißen nicht mehr lösbar miteinander auch mit dem Rahmen 2 verbunden sind.

### Bezugszeichenliste

- 1: Grundkörper
- 2: Rahmen
- 3: Verstärkungselement
- 4: Flansche
- 6: Gelenkelemente
- 7: Fertigungsposition
- 8: Türverkleidungselemente
- 9: Stirnseiten
- 11: Hochstreben
- 12: Endmontageposition
- 13: Verriegelungselemente
- 14: Rasthaken
- 16: Gegenrastelement
- 17: Gleitfläche
- 18: Rastfläche
- 19: Raststeg
- 21: Gegenrastfläche
- 22: Rasthaken
- 23: Rastfläche
- 24: Gegenrastmittel
- 26: Gegenrastfläche
- 27: Gegenelemente

## Patentansprüche

1. Grundkörper (1) zur Anordnung und Befestigung von Türverkleidungselementen für eine Kraftfahrzeugtür welcher spritzgusstechnisch hergestellt ist, aufweisend einen Rahmen (2), der ein oberes Verstärkungselement (3) als oberes Rahmenteil aufweist, welches von diesem abstehende Flansche (4) aufweist,
**dadurch gekennzeichnet, dass**
der Rahmen (2) in Längsrichtung zueinander beabstandete Hochstreben (11) aufweist an deren Stirnseiten (9) das Verstärkungselement (3) über jeweils ein Gelenkelement (6) einstückig in einer von dem Rahmen (2) abstehenden Fertigungsposition (7) angeformt ist.

2. Grundkörper (1) nach Anspruch 1,
**dadurch gekennzeichnet, dass**
das Verstärkungselement (3) in der Fertigungsposition (7) vertikal, also nach oben orientiert von dem Rahmen (2) absteht.

3. Grundkörper (1) nach Anspruch 1 oder 2,
**dadurch gekennzeichnet, dass**
zumindest ein Teil der Flansche (4), insbesondere die längeren, in der Fertigungsposition (7) seitlich, also annähend waagerecht von dem Verstärkungselement (3) abstehen.

4. Grundkörper (1) nach einem der vorhergehenden Ansprüche,
**dadurch gekennzeichnet, dass**
die Flansche (4) bereits bei der einstückigen Herstellung von Rahmen (2) und Verstärkungselement (3) mit angeformt werden.

5. Grundkörper (1) nach einem der vorhergehenden Ansprüche, **dadurch gekennzeichnet, dass**
die Gelenkelemente (6) als Filmscharniere ausgeführt sind.

6. Grundkörper (1) nach einem der vorhergehenden Ansprüche,
**dadurch gekennzeichnet, dass**
das Verstärkungselement (3) aus seiner Fertigungsposition (7) um die Gelenkelemente (6) herum in seine Endmontageposition (12) überführt wird.

7. Grundkörper (1) nach einem der vorhergehenden Ansprüche, **gekennzeichnet durch**
Verriegelungselemente (13), die an dem Verstärkungselement (3) und an dem Rahmen (2) angeordnet sind.

8. Grundkörper (1) nach Anspruch 7,
**dadurch gekennzeichnet, dass**
als Verriegelungselemente (13) Rastmittel und Gegenrastmittel vorgesehen sind.

9. Grundkörper (1) nach Anspruch 8,
**dadurch gekennzeichnet, dass**
an jeweiligen Hochstreben (11) und an dem Verstärkungselement (3) einander korrespondierende Rast- und Gegenrastmittel vorgesehen sind.

10. Grundkörper (1) nach einem der Ansprüche 8 bis 9,
**dadurch gekennzeichnet, dass**
die Rast- und Gegenrastmittel wechselseitig an den Hochstreben (11) und dem Verstärkungselement (3) angeordnet sind.

## Claims

1. Main body (1) for arranging and fastening door trim elements for a motor vehicle door, said main body being produced by injection moulding and having a frame (2), which has as an upper frame part an upper reinforcing element (3), which has flanges (4) that protrude from the latter,
**characterized in that**
the frame (2) has vertical struts (11), which are spaced apart from one another in the longitudinal direction and on the end sides (9) of which the reinforcing element (3) is integrally formed in one piece via in each case one articulation element (6) in a manufacturing position (7) in which said reinforcing element protrudes from the frame (2).

2. Main body (1) according to Claim 1,
**characterized in that**
in the manufacturing position (7), the reinforcing element (3) protrudes vertically, that is to say in an upwardly oriented manner, from the frame (2).

3. Main body (1) according to Claim 1 or 2, **characterized in that**
at least some of the flanges (4), in particular the longer ones, protrude laterally, that is to say approximately horizontally, from the reinforcing element (3) in the manufacturing position (7).

4. Main body (1) according to one of the preceding claims,
**characterized in that**
the flanges (4) have already been concomitantly integrally formed during the one-piece production of the frame (2) and reinforcing element (3).

5. Main body (1) according to one of the preceding claims,
**characterized in that**
the articulation elements (6) are in the form of film hinges.

6. Main body (1) according to one of the preceding claims,
**characterized in that**
the reinforcing element (3) is transferred around the articulation elements (6) from its manufacturing position (7) into its final installation position (12).

7. Main body (1) according to one of the preceding claims,
**characterized by**
locking elements (13), which are arranged on the reinforcing element (3) and on the frame (2).

8. Main body (1) according to Claim 7,
**characterized in that**
latching means and mating latching means are provided as locking elements (13).

9. Main body (1) according to Claim 8,
**characterized in that**
latching and mating latching means that correspond to one another are provided on respective vertical struts (11) and on the reinforcing element (3).

10. Main body (1) according to either of Claims 8 and 9,
**characterized in that**
the latching and mating latching means are arranged in alternating fashion on the vertical struts (11) and the reinforcing element (3).

## Revendications

1. Corps de base (1) destiné à l'agencement et à la fixation d'éléments de garniture de porte pour une porte de véhicule automobile, fabriqué par moulage par injection, comprenant un cadre (2) qui présente un élément de renforcement supérieur (3) en tant que partie de cadre supérieure, lequel présente des brides (4) s'étendant à partir de celui-ci,
**caractérisé en ce que**
le cadre (2) présente des montants verticaux (11) espacés les uns des autres dans la direction longitudinale, sur les côtés frontaux (9) desquels l'élément de renforcement (3) est moulé d'une seule pièce par l'intermédiaire d'un élément d'articulation (6) respectif dans une position de fabrication (7) s'étendant à partir du cadre (2).

2. Corps de base (1) selon la revendication 1, **caractérisé en ce que**
l'élément de renforcement (3), dans la position de fabrication (7), s'étend verticalement à partir du cadre (2), c'est-à-dire orienté vers le haut.

3. Corps de base (1) selon la revendication 1 ou 2, **caractérisé en ce que**
au moins une partie des brides (4), en particulier les plus longues, s'étendent latéralement à partir de l'élément de renforcement (3) dans la position de fabrication (7), c'est-à-dire de manière approximativement horizontale.

4. Corps de base (1) selon l'une quelconque des revendications précédentes,
**caractérisé en ce que**
les brides (4) sont déjà moulées avec le cadre (2) et l'élément de renforcement (3) lors de leur fabrication d'une seule pièce.

5. Corps de base (1) selon l'une quelconque des revendications précédentes,
**caractérisé en ce que**
les éléments d'articulation (6) sont réalisés sous la forme de charnières à film.

6. Corps de base (1) selon l'une quelconque des revendications précédentes,
**caractérisé en ce que**
l'élément de renforcement (3) est transféré depuis sa position de fabrication (7) vers sa position de montage final (12) autour des éléments d'articulation (6).

7. Corps de base (1) selon l'une quelconque des revendications précédentes,
**caractérisé par**
des éléments de verrouillage (13) disposés sur l'élément de renforcement (3) et sur le cadre (2).

8. Corps de base (1) selon la revendication 7, **caractérisé en ce que**
des moyens d'encliquetage et des contre-moyens d'encliquetage sont prévus en tant qu'éléments de verrouillage (13).

9. Corps de base (1) selon la revendication 8, **caractérisé en ce que**
des moyens d'encliquetage et des contre-moyens d'encliquetage correspondants sont prévus sur les montants verticaux (11) respectifs et sur l'élément de renforcement (3).

10. Corps de base (1) selon l'une quelconque des revendications 8 à 9,
**caractérisé en ce que**
les moyens d'encliquetage et les contre-moyens d'encliquetage sont disposés réciproquement sur les montants verticaux (11) et l'élément de renforcement (3).
